# EUROPEAN PATENT SPECIFICATION

(11) **EP 1 170 933 B1**
(45) Date of publication and mention of the grant of the patent: **26.10.2005**
(21) Application number: 00610069.7
(22) Date of filing: 07.07.2000
(51) Int. Cl.: H04M 1/60

(54) **An accessory device for use in connection with a mobile telephone**
Zusatzgerät zur Verwendung mit einem Mobiltelefon
Accessoire pour être connecté à un téléphone portable

(43) Date of publication of application: 09.01.2002
(73) Proprietor: TELEFONAKTIEBOLAGET LM ERICSSON (publ), 164 83 Stockholm (SE)
(72) Inventor: Hollström, Magnus, 222 41 Lund (SE); Borgström, Anders, 239 32 Skanör (SE); Schack, Göran, 296 92 Yngsjö (SE)
(74) Representative: Boesen, Johnny Peder

(56) References cited:
- WO-A-99/60764
- US-A- 5 596 638
- US-A- 5 832 098
- US-A- 6 038 457

## Description

The invention relates to an accessory device for use in connection with a mobile telephone and dL at least one sound reproducing unit, said device comprising means for playing back audio files as audibly perceptible signals via the sound reproducing unit, and said device being adapted to be connected to said mobile telephone by cable means.

Portable playback devices for use with e.g. audio cassettes or compact discs (CD's) have been known for many years and are widely used, because they allow a user to listen to music or other audio information at any place and during transport.

Today, different methods of compressing digitized audio signals significantly are also known, and this situation has led to the fact that portable storage mediums, such as memory cards, of even limited size can store a considerable amount of audio information. Therefore, also portable playback devices for such storage mediums have been made available. As an example, portable playback devices for audio files in MP3 format may be mentioned.

US 5 841 979 discloses a portable digital audio storage and playback apparatus for reception, storage, D/A conversion and playback of digitized and compressed audio files. The compressed audio files may be received at a transfer rate that is at least two times the normal audible playback rate. A similar apparatus is known from US 5 914 941, which mentions that program material can be obtained either through a digital data storage cartridge, which may be removable, or through electronic data transfer from cable TV or similar sources.

However, these devices are designed to be used exclusively for playback of audio information. Many users have a need for other functions which these devices are not able to fulfil, and, thus, these users have to carry additional devices in order to have their needs fulfilled.

It is also known, e.g. from WO 99/03294, to share a common headset between an audio device and a communications device in the form of a radio telephone, such that the headset is used for telephone conversation when the telephone is active, and switched to the audio device when the telephone is not active. The audio device is either a receiver for public audio broadcast programs, or it is a compact disc player or a cassette player. The headset used is a special headset including a microphone for use during the telephone conversation. Such headsets are also used as an accessory to mobile telephones for allowing hands-free operation of the mobile telephone. A normal standard headset without a microphone cannot be used.

Other similar solutions are known in which the audio device is an accessory device connectable to a mobile telephone and adapted to replay digitized and compressed audio files stored on a portable storage medium such as a memory card. Alternatively, digitized and compressed audio files may be downloaded directly through the mobile telephone and then replayed by the audio device.

The audio or accessory device is connected to the mobile telephone as a plug-on device so that a combined device is achieved. The accessory device or the mobile telephone has a connector to which the special headset with microphone can be connected by means of a cable. The microphone is either mounted on the headset or integrated into the cable of the headset. As mentioned, it is a drawback that a special, and thus more expensive, headset has to be used, and adding to this it is also very difficult to design the accessory device so that the design fits several different phone models. Further, the combined device is relatively large compared to the phone itself and thus it is more clumsy to handle. This also implies a risk that the accessory device may break off from the phone by accident during use.

US 5 978 689 shows an audio device that can be connected through a specially equipped mobile telephone to a headset with a built-in microphone.

Thus, it is an object of the invention to provide an accessory device in which a normal standard headset without a built-in microphone can be used, and which has a design that can be used together with several different phone models without increasing the size of the mobile telephone too much.

According to the invention, this is achieved in that it further comprises a standard headset connector for connection to said at least one sound reproducing unit, and a microphone.

By using a cable between the accessory device and the mobile telephone the two devices can be placed separated from each other, and thus the size of the mobile telephone is only increased by the small volume of a connector at the end of the cable. This also removes the risk of breaking the two devices from each other during use, and the accessory device can be designed independently of the design of a specific phone model. By further incorporating a microphone and a standard headset connector in the accessory device there is no longer a need for having a microphone in the headset, and thus a normal standard headset without a built-in microphone can be used.

When the accessory device further comprises a clip for attaching the accessory device to clothing, the device can easily be attached to the user's clothing at a convenient location.

When the accessory device is designed to have an exterior form similar to a tie knot, an expedient embodiment is obtained which can replace a normal tie knot. In this way the device is less visible, and at the same time the user is relieved of the time-consuming fastening procedure of a normal tie.

When the accessory device is designed to have an exterior form similar to a brooch, an expedient embodiment is obtained which can be used as a substitute for a normal brooch. In this way the device is less visible.

The invention will now be described more fully below with reference to the drawing, in which
figure 1 shows a system with a mobile telephone and an audio playing device,
figure 2 shows a system with a mobile telephone and an audio playing device improved according to the invention,
figure 3 shows the location of a clip on the backside of an audio playing device,
figure 4 shows the design of a first embodiment of an audio playing device according to the invention, and
figure 5 shows the design of a second embodiment of an audio playing device according to the invention.

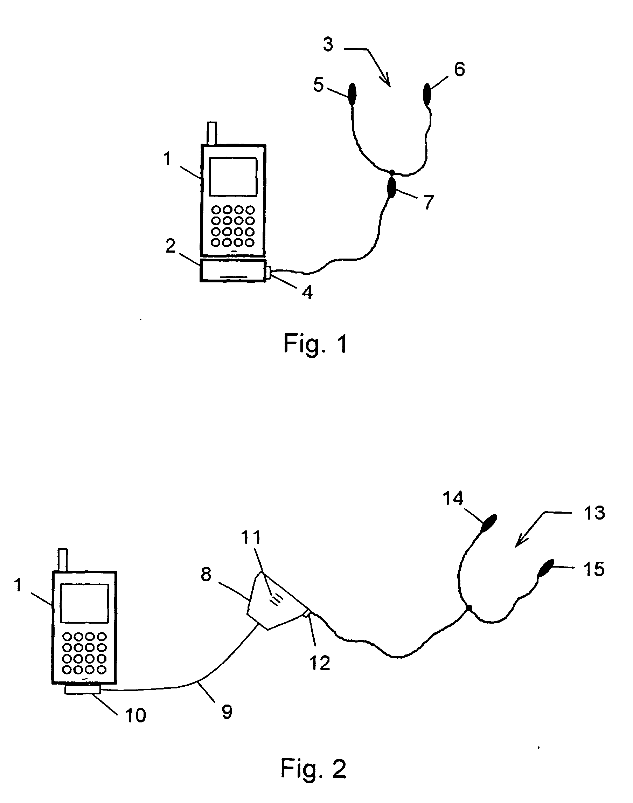

Figure 1 shows an example of a system for providing a cellular telephone 1 with a combination of portable hands-free operation and hi-fi audio stereo playback. The telephone 1 can be a GSM phone adapted to communicate through its built-in antenna with a GSM base station (not shown) connected to a GSM network.

An audio playing accessory device in the form of a plug- in device 2 is connected to the phone 1 galvanically at the bottom end of the phone. A sound reproducing unit in the form of a headset 3 is connected to the accessory device 2.

In the example shown, the device 2 has a slot for insertion of a portable storage medium such as a memory card or a Multi-Media Card on which digitized and compressed audio files are stored, e.g. in MP3 format. The accessory device 2 is adapted to decompress or decode the compressed audio files and playback the resulting audio signals through the headset 3. Alternatively the audio files may be downloaded to the audio playing device 2 through the cellular phone 1. They may either be stored in the audio playing device and played back subsequently, or they may be played back directly (streaming).

The headset 3 has two earpieces 5 and 6 acting as loudspeakers for reproduction of the audio signals as well as speech signals received by the phone from a conversation partner during a telephone call. Further, the headset 3 is equipped with a microphone 7 for receiving the user's voice during a telephone call so that this voice signal can be transmitted to the conversation partner. Such special headsets including a microphone are also used for hands-free operation of mobile telephones alone, i.e. without the audio playing device 2. The headset 3 is connected to the audio playing device 3 through a special headset connector 4 that has pins for the microphone signals as well as for the signals to the earpieces 5 and 6.

If audio content (e.g. music) is played in the headset and an incoming call appears, the audio playback will be halted or softened, i.e. the sound level reduced, while the conversation is going on. The speech signals received from the conversation partner are now reproduced in the earpieces of the headset that was used before the call for playback of the audio files. When the conversation is finished, the audio playback is resumed.

One of the drawbacks of this system is that a special headset with a microphone is needed. A normal standard headset, which many especially young people already have in their possession, cannot be used. It is also very difficult to design the accessory device so that the design fits several different phone models. Further, the combined device (i.e. the phone and the audio playing device) is relatively large compared to the phone itself and thus it is more clumsy to handle. This also implies a risk that the audio playing device may break off from the phone by accident during use.

Figure 2 shows an improved system. Here the audio playing device 8 is separated from the phone 1. A cable 9 is used between the audio playing device 8 and the phone 1. The cable needs wires for power, audio receive/transmit and data receive/transmit. One end of the cable is mounted on the audio playing device 8 while the other terminates in a connector 10 adapted to be inserted into a corresponding connector on the phone. The connector on the cable may be a male system connector.

The audio playing device 8 also differs from the device 2 of figure 1 in that it has a built-in microphone 11. This microphone has the same function as the microphone 7 of figure 1, but the integration of the microphone in the audio playing device 8 means that a normal standard headset 13 can now be used instead of the special headset 3 with built-in microphone. Thus the device 8 is equipped with a standard headset connector 12 to which the standard headset 13 can be connected. The headset 13 has two earpieces 14 and 15 corresponding to the earpieces 5 and 6 of figure 1.

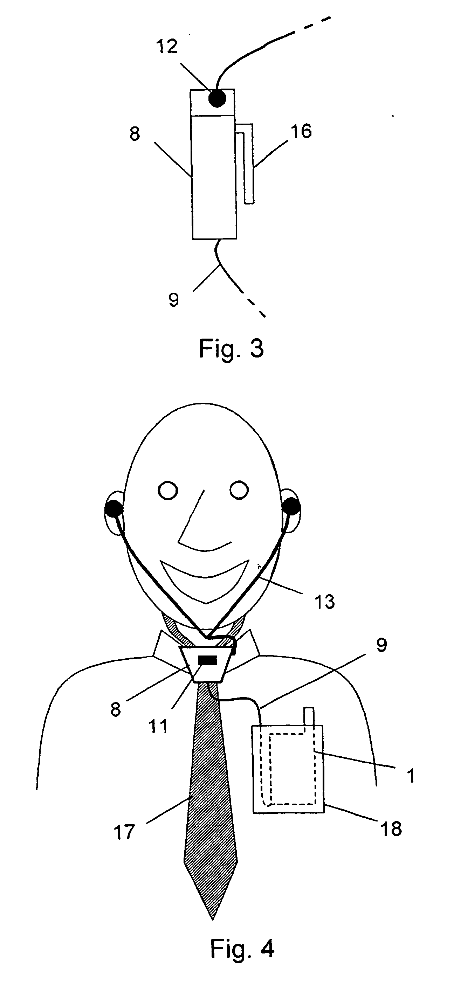

The audio playing device 8 can now be placed in the vicinity of the user's mouth so that the built-in microphone 11 can fulfil its function. Therefore, in one embodiment the device 8 is equipped with a clip 16 on its backside so that it can be attached to the clothing worn by the user. The clip 16 is shown in figure 3.

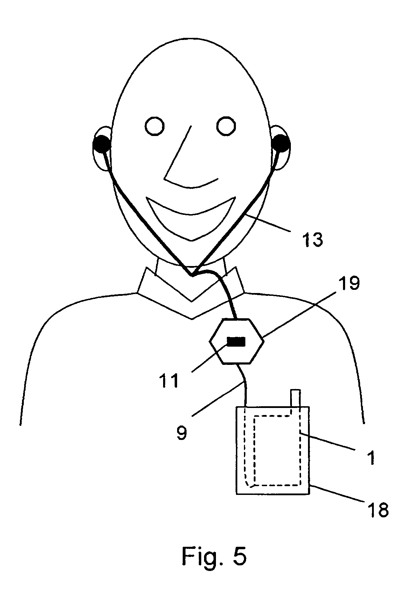

Since the audio playing device 8 is no longer directly combined with the mobile telephone 1, the device can now be designed independently of the design of a specific phone model. Instead the design of the device can now be created so that it looks naturally together with the clothing of the user. Two examples are shown in the figures 4 and 5.

In the embodiment shown in figure 4 the audio playing device 8 is designed to look like a tie knot, and it is attached to the clothing at the same location as a normal tie knot. In this case the audio playing device 8 actually replaces the normal tie knot, and thereby the user is relieved of the time-consuming fastening procedure of a normal tie. Instead the tie 17 is just put through a clip on the backside of the device 8. The location of the microphone 11, which is now included in the device 8, in front of the neck of the user is very expedient because it is close to the mouth, and thus the voice of the user. The telephone 1 is typically placed in a pocket 18 and connected to the audio playing device by the cable 9. The headset 13 is connected to the audio playing device 8 as shown before.

In the embodiment shown in figure 5 the audio playing device 19 is designed to look like a brooch, and it is attached to the clothing at the same location as a normal brooch. Also in this case the microphone is located relatively close to the mouth of the user. Again the telephone 1 is typically placed in a pocket 18 and connected to the audio playing device by the cable 9. The headset 13 is connected to the audio playing device 8 as shown before.

Although a preferred embodiment of the present invention has been described and shown, the invention is not restricted to it, but may also be embodied in other ways within the scope of the subject-matter defined in the following claims.

## Claims

1. An accessory device (8; 19) for use in connection with a mobile telephone (1) and at least one sound reproducing unit (13), said device (8; 19) comprising means for playing back audio files as audibly perceptible signals via the sound reproducing unit (13), and said device (8; 19) being adapted to be connected to said mobile telephone (1) by cable means (9),
**characterized in that** it further comprises:
• A standard headset connector (12) for connection to said at least one sound reproducing unit (13), and
• a microphone (11).

2. An accessory device according to claim 1, **characterized in that** it further comprises a clip (16) for attaching the accessory device (8; 19) to clothing.

3. An accessory device according to claim 1 or 2, **characterized in that** it is designed to have an exterior form (8) similar to a tie knot.

4. An accessory device according to claim 1 or 2, **characterized in that** it is designed to have an exterior form (19) similar to a brooch.

## Patentansprüche

1. Zubehörvorrichtung (8; 19) zur Verwendung in Verbindung mit einem Mobiltelefon (1) und mindestens einer Tonwiedergabeeinheit (13), wobei die Vorrichtung (8; 19) Mittel zum Abspielen von Audio-Dateien als akustisch wahrnehmbare Signale mittels der Tonwiedergabeeinheit (13) umfasst, und wobei die Vorrichtung (8; 19) geeignet ist, an das Mobiltelefon mittels eines Kabels (9) angeschlossen zu werden,
**dadurch gekennzeichnet, dass** sie weiter umfasst:
- einen Standard-Kopfhörer-Anschluss (12) zur Verbindung mit der mindestens einen Tonwiedergabeeinheit (13), und
- ein Mikrofon (11).

2. Zubehörvorrichtung nach Anspruch 1, **dadurch gekennzeichnet, dass** sie weiter einen Clip (16) zum Anbringen der Zubehörvorrichtung (8; 19) an der Kleidung umfasst.

3. Zubehörvorrichtung nach Anspruch 1 oder 2, **dadurch gekennzeichnet, dass** sie so gestaltet ist, dass sie eine äußere Form (8) ähnlich einem Krawattenknoten aufweist.

4. Zubehörvorrichtung nach Anspruch 1 oder 2, **dadurch gekennzeichnet, dass** sie so gestaltet ist, dass sie eine äußere Form (19) ähnlich einer Brosche aufweist.

## Revendications

1. Dispositif (8 ; 19) accessoire pour utilisation de connexion avec un téléphone mobile (1) et au moins un module (13) de reproduction de son, ledit dispositif (8 ; 19) comprenant un moyen de lecture de fichiers audio en tant que signaux perceptibles du point de vue audible via le module (13) de reproduction de son, et ledit dispositif (8 ; 19) étant adapté pour être connecté avec ledit téléphone mobile (1) par un moyen formant câble (9),
**caractérisé en ce qu'**il comprend en outre :
- un connecteur standard (12) de combiné prévu pour connexion avec ledit au moins un module (13) de reproduction de son, et
- un microphone (11).

2. Dispositif accessoire selon la revendication 1, **caractérisé en ce qu'**il comprend en outre une attache (16) servant à attacher le dispositif (8 ; 19) d'accessoire à un vêtement.

3. Dispositif accessoire selon la revendication 1 ou 2, **caractérisé en ce qu'**il est conçu pour avoir une forme extérieure (8) similaire à un noeud de cravate.

4. Dispositif accessoire selon la revendication 1 ou 2, **caractérisé en ce qu'**il est conçu pour avoir une forme extérieure (19) similaire à celle d'une broche.
